# EUROPEAN PATENT APPLICATION

(11) **EP 4 282 688 A1**
(43) Date of publication of application: **29.11.2023**
(21) Application number: 23174547.2
(22) Date of filing: 22.05.2023
(51) Int. Cl.: B60K 37/06, B60R 16/02

(54) **MONITORING SYSTEM OF PARAMETERS RELATED TO A VEHICLE EQUIPPED WITH USER INTERFACE**

(30) Priority: 24.05.2022 IT 202200010820
(71) Applicant: Floid s.r.l., 45100 Rovigo (IT)
(72) Inventor: DALL'AGLIO, Massimo, 45100 Rovigo (IT)
(74) Representative: Botti & Ferrari S.p.A.

(57) **Abstract**

Monitoring system of parameters related to a vehicle comprising: a main unit equipped with a control and processing board provided with Internet connectivity and which can interface with at least one electronic control unit of a vehicle; and an interface unit (1), separated from the main unit, said interface unit (1) being configured to be able to acquire and forward to the main unit a plurality of different signals corresponding to different manipulations of an operator.

## Description

### Field of application

The present invention refers to a monitoring system of parameters related to a vehicle, in particular a system equipped with an interface for the driver.

The invention finds useful application in the management of single vehicles or fleet of vehicles. In particular, it can be advantageously used in devices with dual power source, particularly allowing a switching function integrated in the user interface.

Preferably, the system can be used in closed-cabin vehicles, for example motor vehicle. The system can be anyway easily adapted for the installation on two-wheeled vehicles, in particular vehicles equipped with at least one propulsion system alternative to the muscular one, such as for example motorcycles, electric bicycles and electric kick scooters.

The system can be advantageously marketed as aftermarket accessory, due to its easy installation on vehicles which are not specifically arranged for this purpose. It is not anyway excluded that the system is natively installed on a vehicle.

### Prior art

As everyone knows, in almost most vehicles, an on-board instrumentation is natively provided which, on the one hand, allows the driver to monitor a plurality of functioning parameters, generally through warning lights and other indicators positioned on the dashboard, on the other side, it provides interface commands for the adjustment of certain functions useful for the safety and driving comfort.

However, it has been found that the instrumentation proposed on the standard vehicle can be unsatisfactory over time: both for practical or regulatory requirements that arose after the marketing of the vehicle, and due to the absence of a connectivity interface which allows the real-time storage and external management of the operational data.

A drawback notoriously encountered by owners of motor vehicles is for example the management of two different power sources, for example petrol power source and gas or electric power source. In these cases, especially in, but not limited to, the case of methane or LPG conversions, the second power source is sometimes installed after the purchase, and the simple diagnostics proposed by the interface system often allows little more than a rough indication of the residual fuel level.

However, a more accurate detection and processing system would allow for example a real-time evaluation of the savings made using one type or the other type of power source, with considerable advantages especially in case of the commercial use of the vehicle.

A further requirement, which is not satisfied by the conventional instrumentation, refers to matters concerning the safety, such as, for example, the collision alarm- the so-called *eCall* technology- or alarms of another type, which may have not been natively installed on the vehicle and this is almost never the case for light vehicles without registration such as electric kick scooters.

For the above-mentioned reasons, some monitoring devices applied aftermarket have been proposed over time, which, even if they are functional for their purpose, nevertheless have different limits.

A first limit, due to the reduced spaces for installing the above-mentioned devices, refers to the essentiality of the interface systems for the user, which are often- for example in the switching devices for vehicles with dual power source - made of a single button. Said essentiality does not allow the integration of different functions on a single device, therefore, the devices of the prior art generally have a univocal intended use. On the other hand, if it is desired to implement a device with alarm function, the use of a simple button certainly increases the risk of accidental activation.

Another limit arises from the fact that the applied monitoring systems of the prior art do not generally have Internet connectivity, which considerably limits the possibilities of signal processing and does not allow storing the data for a subsequent historical investigation, for example aimed at the consumptions.

A further limit comes from the poor function integration in the devices of the prior art, which makes said devices poorly flexible and not reconfigurable for the use on different types of vehicles and/or for different requests of the user.

In light of the above, the technical problem underlying the present invention is to devise a device with is able to solve, completely or in part, the drawbacks complained of with reference to the prior art.

### Summary of the invention

The previously identified technical problem is solved by a monitoring system of parameters related to a vehicle comprising: a main unit equipped with a control and processing board provided with Internet connectivity and which can interface with at least one electronic control unit of a vehicle; and an interface unit, separated from the main unit, said interface unit being configured to be able to acquire and forward to the main unit a plurality of different signals corresponding to different manipulations of an operator.

The Internet connectivity of the control board can be guaranteed, in a per se known manner, by a modem connected to an antenna and an integrated SIM card reader. In particular, modem and antenna preferably support the 4G or 5G standard.

The interface unit, in order to allow the plurality of commands by the operator, can comprise a front button and a selection rotating ring which are manipulable by the operator to forward at least three different signals.

Thereby, the device is able to accept a plurality of commands still maintaining extremely small sizes: in particular, it can be made as a button element with a diameter lower than 30 mm.

The rotating ring preferably has an elastic strike and is arranged to alternately operate two opposed pressure switches when rotated in the one or in the other direction.

From a structural point of view, the ring can be integral with an inner ring equipped with at least one radial pawl arranged to strike the pressure switches, thus activating them.

Preferably, the interface unit comprises a substantially cylindrical case, said rotating ring defining the side wall and said front button defining the exposed base of said cylindrical case.

The front portion of the cylinder can be preferably pressed to the inside against a strike made of elastic means, for example springs, thus straining a microswitch mounted on an electronic board inside the case.

The three signals which can be sent by operating the rotating ring and the front button can be variously combined to allow sending a plurality of commands; preferably, the commands can be programmed according to the specific requirements of the device. Intuitively, the rotations of the ring can be used to perform a selection while the pressure of the front button can be used to confirm a command.

By the commands, different operational modes of the monitoring system can be for example selected, for example it can be decided if the tracking and diagnostics abilities of the system are to be completely used or if it is limited by being used as collision alarm. A command for the Bluetooth pairing of one or more peripheral devices can be furthermore used.

Still using the commands, the switching between different power source modes of the vehicle can be carried out, for example between a first petrol power source and a second LPG, methane or electric power source. The primary and secondary power sources are indicated by way of example only, but the invention can clearly apply to all the fuels and the existing alternative power sources, without loss of generality. It can be also selected which level of fuel to display through a light indicator of the interface unit.

In case of a dual fuel vehicle, it is also advantageous to interface the main unit with the control unit dedicated to the second type of power source of the vehicle, for instance the gas control unit. In that case, the main unit can advantageously modify the inner parameters of the gas control unit, hence modifying the mapping of the control unit.

The mapping can be recalculated directly on board of the main unit in view of internal diagnostics, based on the data collected by the sensor associated with the device.

As an alternative or in combination with the above, the new mapping can be remotely transmitted, in view of a recalculation based on diagnostic parameters retrieved from the vehicle or also in view of statistical parameters derived from other vehicles of the fleet, or even as a result of updates of the mapping proposed through time by the same producer of the gas control unit. In these cases, the Internet connectivity can be employed.

Therefore, the system according to the invention may allow an over-the-air (O.T.A.) remapping of the gas control unit.

The interface unit comprises lighting means arranged as light indicator, to inform the operator of a condition and/or the intensity of a parameter. Preferably, said lighting means are arranged to reflect on the side surface of the ring, so as to create an edge effect. The variation of a quantity can be particularly indicated by hitting with the light effect an angular portion greater or smaller than the circumferential edge. Different conditions and parameters can be identified by the usage of different colours.

Preferably, said lighting means comprise RGB LEDs, being therefore able to change the colour by conveying a plurality of different messages linked to different chromatic effects.

Preferably, four RGB LEDs are provided on the support side for visual functionalities (levels, alarms, etc.), and a further condition RGB Led in the driving side (brightness and colour variation based on the operational mode or alarms).

In a preferred embodiment, said main unit comprises at least one accelerometer used by the control and processing board to identify alarm conditions due to accelerations and/or decelerations exceeding a threshold value, possibly calling an emergency number. Therefore, a device with *eCall* technology can be implemented in compliance with current European regulations.

In a preferred embodiment, said main unit comprises at least one GPS receiver arranged to identify the position of the vehicle. The acquisition of the GPS signal allows a precise tracking of the route of the vehicle, which is useful for a plurality of purposes in the scope of the present invention.

Preferably, said main unit comprises at least one CAN-BUS input port arranged to interface with the electronic control unit ECU of a vehicle, thus allowing all the parameters already detected by said control unit to be acquired. Thereby, it is possible to have whole overview of the general conditions of the vehicle and, therefore, to predict the maintenance works to be carried out on the vehicle.

The main unit can also provide a flash memory, which is useful for temporarily storing technical data acquired before being possibly sent to a remote server.

In a preferred embodiment, the system is configured to interface through the Internet with a server to store the parameters acquired by the control and processing board for diagnostic and/or predictive purposes. In particular, the technical data acquired by the monitoring system- including those coming from the control unit ECU - can be forwarded to a dedicated cloud to monitor the fuel consumptions, the route taken, the driving analysis, the fuel consumption, the reduction of carbon dioxide emissions compared to the use of a traditional power source, the history of the routes and more.

The monitored data can be particularly helpful when managing a fleet of vehicles.

It should be also noted that the system described above can act as a black box.

Further characteristics and advantages will become more apparent from the detailed description given hereinafter of a preferred, but not exclusive, embodiment of the present invention, with reference to the accompanying figures given by way of non-limiting example.

### Brief description of the drawings

Figure 1 shows a prospective view of an interface unit of the monitoring system according to the present invention;
figure 2 shows a rear view of the interface unit of figure 1;
figure 3 shows a front view of the interface unit of the previous figures;
figure 4 shows a side view of the interface unit of the previous figures;
figure 5 shows a top view of the interface unit sectioned according to plane A-A of figure 3;

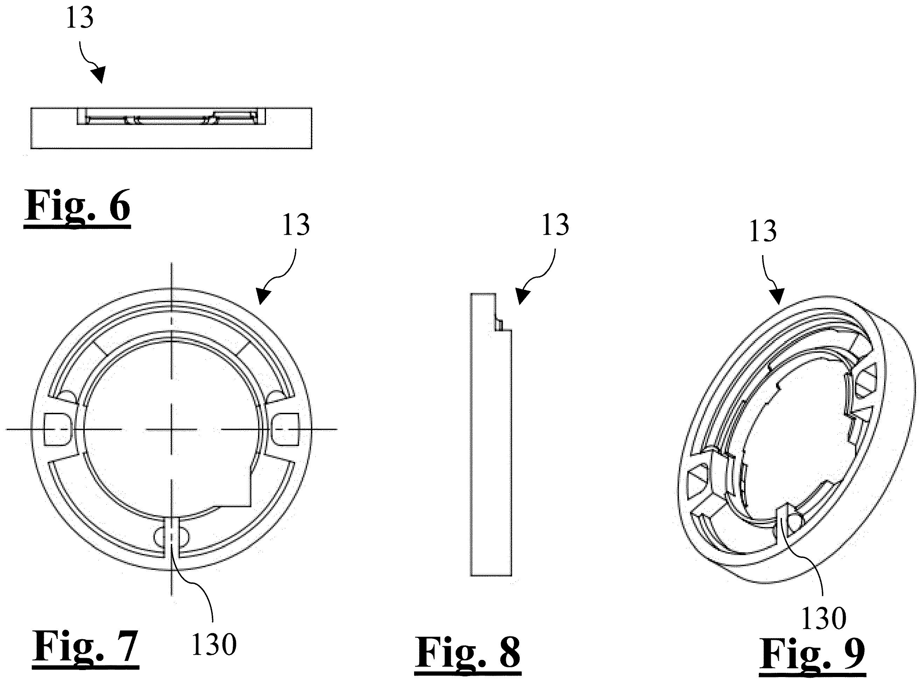

figure 6 shows a top view of an inner rotating ring of the interface unit of the previous figures;
figure 7 shows a front view of the inner rotating ring of figure 6;
figure 8 shows a side view of the inner rotating ring of figures 7 and 8;
figure 9 shows a prospective view of the inner rotating ring of figures 7-9;

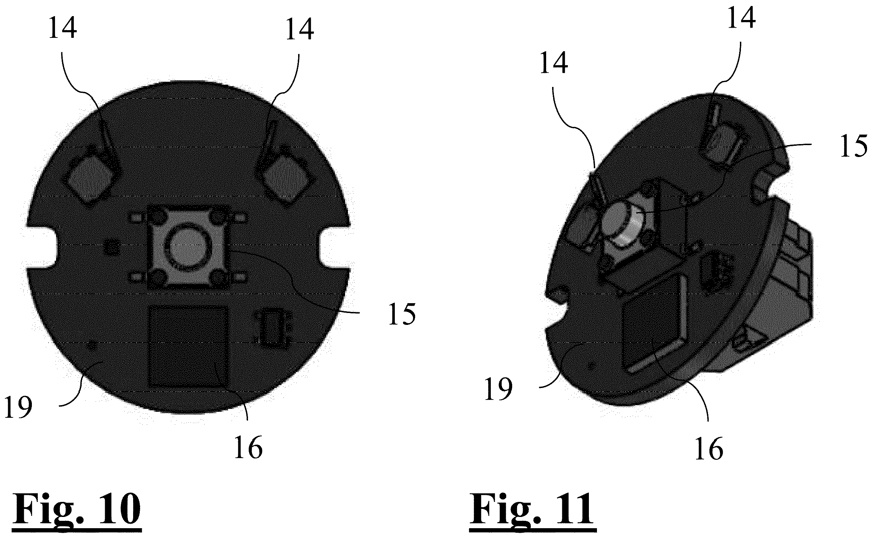

figure 10 shows a front view of an electronic board inside the interface unit of figures 1-5;
figure 11 shows a prospective view of the inner electronic board of figure 10;
figure 12 shows a prospective view of a main unit of the monitoring system according to the present invention;
figure 13 shows a prospective view of an electronic board inside the main unit of figure 12;

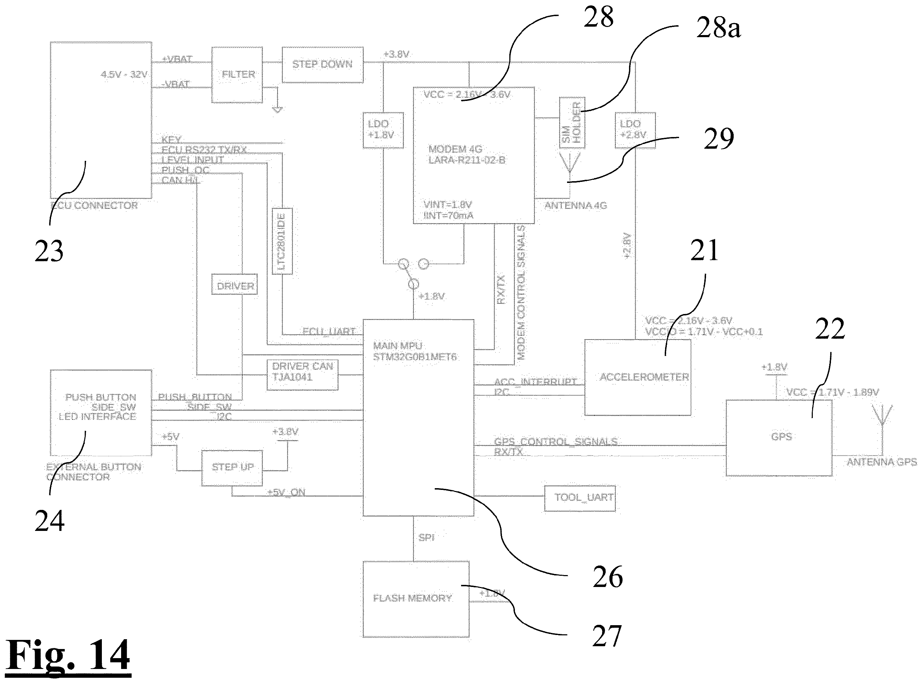

figure 14 shows a functional block diagram of the monitoring system according to the present invention.

### Detailed description

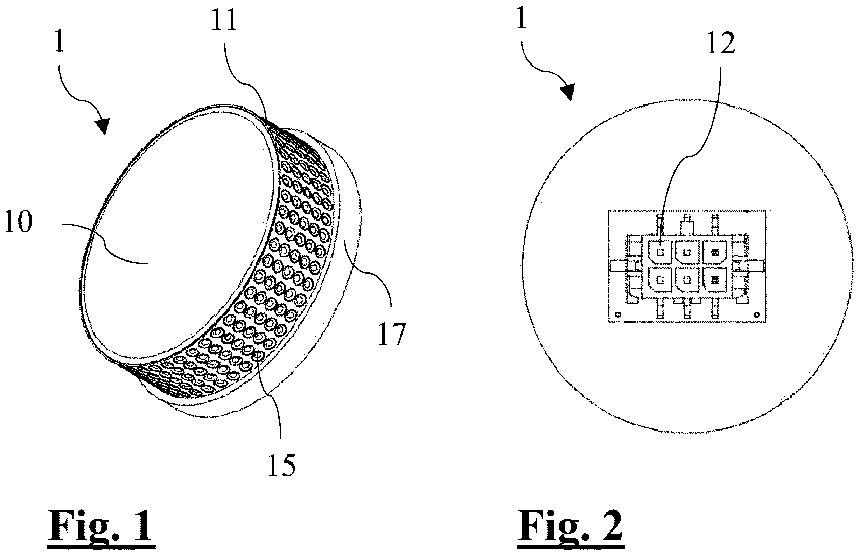

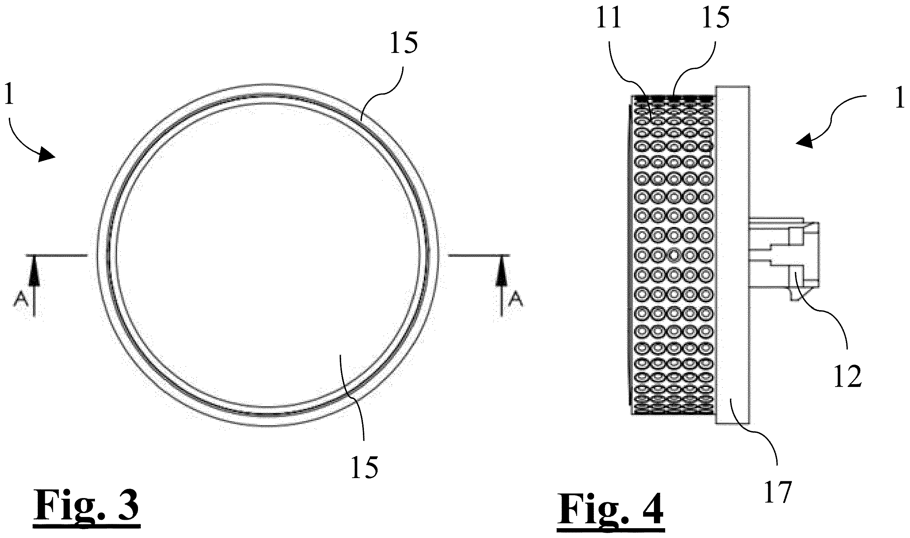

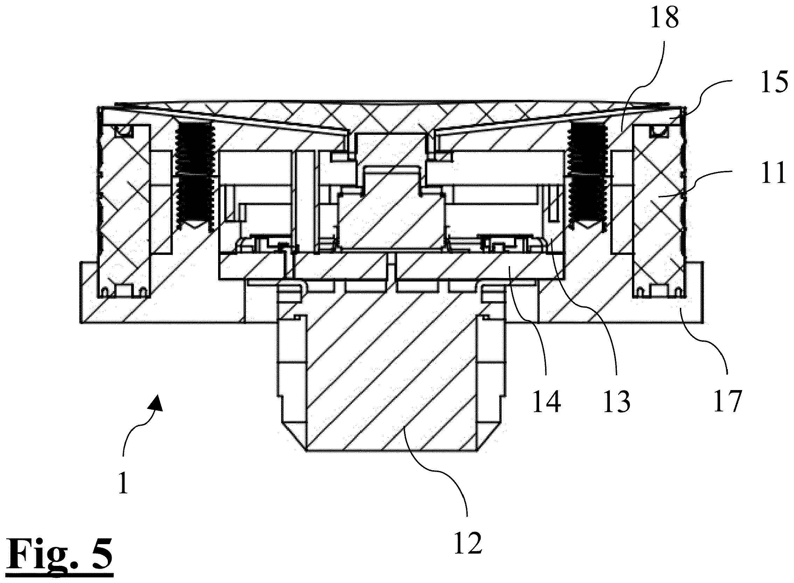

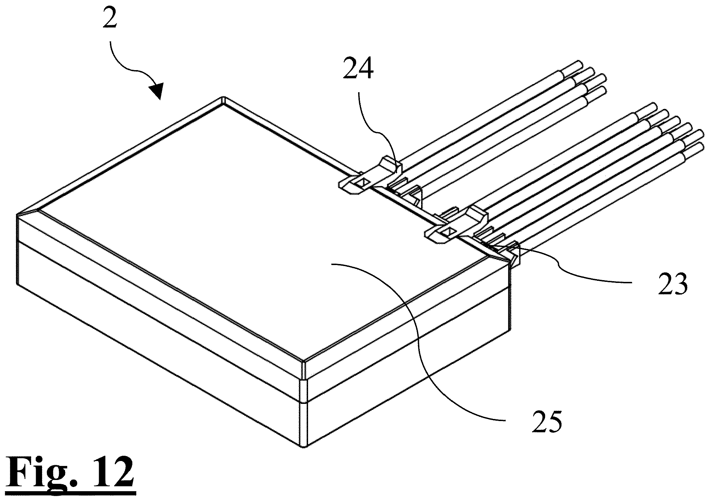

The monitoring system of the parameters of a vehicle shown in the attached figures comprises an interface unit, globally indicated with 1 in figures 1-5, and a main unit, globally indicated with 2 in figure 12.

The interface unit 1 and the main unit 2 are made of two distinct, separately manipulable bodies, which are suitably connected through a cable which engages between a jack plug 12 of the interface unit 1 and an interface port 24 of the main unit 2. It can be observed that the two units 1, 2 must not be necessarily connected by a cable, but they can be also put in communication with a wireless technology, for example through a Bluetooth technology.

The interface unit 1 has a small size, which can be compared to the size of a button or a small coin, and is arranged to be applied on the dashboard of a vehicle on which the monitoring system of the parameters according to the present invention is mounted.

The interface unit 1 allows the bidirectional communication between the user and the monitoring system, that is, it allows on the one hand to acquire commands, on the other hand to transmit information through a light indicator.

Advantageously, the interface unit comprises a cylindrical external case 15 inside which a control board 19 is contained which is equipped with at least one secondary microprocessor 16.

The cylindrical external case 15 is made of a back base 17, an external side wall defining a rotating ring 11 and a lid 18, associated with the back base 17 and surmounted by a front button 10.

The jack plug 12 develops at the rear with respect to the cylindrical external case 15, which jack plug is directly associated with the control board 19. The control board 19 is therefore integral with the jack plug 12.

The device comprises an inner ring 13, which is integrally fastened to the rotating ring 11. The rotation of the rotating ring 11 therefore drags the inner ring 13, which advantageously has at least one pawl 130 whose function is to alternately contact two opposite pressure switches 14 integrally mounted on the control board 19. Thereby, the rotations in one and in the other direction of the rotating ring 11 with strike alternately operate the first or the second pressure switches 14, resulting in switching commands which can be read by the control board and forward to the main unit 2.

The control board 19 furthermore comprises a microswitch 15 in a central position, which is adapted to detect a pressing of the front button.

The operator, despite the small sizes of the interface, therefore has at least three ways for interacting with it: by rotating it clockwise, by rotating it counterclockwise and by pressing it. Advantageously, the three actions can be combined with each other so as to allow a plurality of commands to the operator.

The interface unit also comprises lighting means, preferably made of one or more RGB LEDs, which can selectively create lightening effects perceivable from the outside of the cylindrical case 15.

Preferably, the lighting effects are reflected through the rotating ring 11, that is, they appear as edge effects with respect to the device and can change in colour and intensity according to the information to transmit to the user.

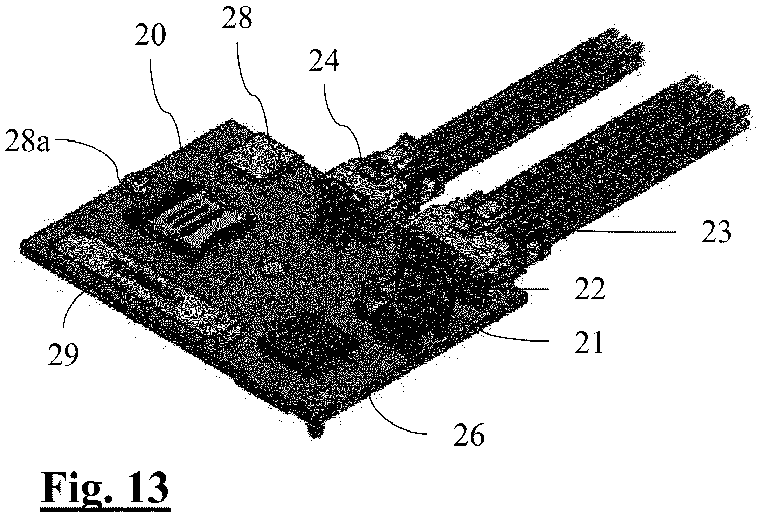

The main unit 2, individually shown in figure 12, comprises a box case 25 which houses inside it a control and processing board 20, which is visible in turn in figure 13.

The interface port 24, which allows the connection with the interface unit previously described, is present at the rear of the unit; at least one second port 23 is also present, which defines a CAN-BUS connection with the control unit ECU of the motor vehicle on which the monitoring unit is mounted. Through this connection, the control and processing unit 20 is able to acquire all the data collected by the control unit ECU ad communicate with it in a bidirectional manner.

It should be noted that, upon suitable command given by the interface unit 1, the control and processing board 20 can process and forward a signal for switching the power source of the vehicle, changing, for example, between a petrol power source and an electric, LPG or methane power source. As previously mentioned, the primary and secondary power sources are indicated by way of non-limiting example only.

The RGB LEDs previously described allow, on the other hand, to display the type of power source currently used and possible parameters regarding the power source, for example a battery charge level and the quantity of residual petrol in the tank.

The control and processing board 20 advantageously comprises a plurality of components which allow it to have an Internet connectivity in addition the acquisition, processing and temporary storage of data related to the operation of the vehicle.

In fact, in addition to a main microprocessor 26, an accelerometer 21, a GPS receiver 22, a flash memory 27, a modem 28 equipped with a respective antenna 29 and connected to a SIM holder unit 28a (for example of the micro-SIM type) are preferably provided.

Overall, the different components of the control and processing board 20 allow the device a plurality of additional functions with respect to that of simply switching the power source system.

The GPS system 22, for example, allows the tracking of the vehicle and the following evaluation of the fuel consumption according to the type of route taken and the driving modes. In a known way, it also allows the transmission of the vehicle position in case of an emergency call, through the *eCall* technology.

The accelerometer 21 in turn allows to implement the *eCall* technology, particularly allowing sudden decelerations ascribable to a collision to be detected.

The flash memory 27 allows a temporary storage of the data for a short-term historical investigation.

The Internet connectivity, which allows sending operational data to a remote location, is particularly important. This not only allows the integrated management of a company fleet, but it also allows the integration of the operational data of the single vehicle in a cloud system with a database which is dedicated to the same vehicle and can be queried by the same monitoring system installed on board for diagnostic purposes.

The creation of a specific database, which can by queried by the vehicle and is updated in real-time with its operation parameters, is an extraordinary instrument for managing the vehicle, allowing, for example, a planning of the inspections both based on scheduled deadlines and on the actual operational evaluations for the operation on the road.

The above-described system can also be interfaced with a possible gas control unit of the vehicle on which it is mounted, allowing remapping of such a control unit according to the description in the summary of the invention.

It should be also noted that the system according to the present invention can act as black box of the vehicle.

A considerable advantage of the present invention, in light of what has been described above, concerns the safety protection both thanks to an accurate and early diagnosis of possible defects of the vehicle, and through implementations of alarms known per se such as the *eCall* technology.

Another advantage also concerns the predictive possibilities of the system according to the invention, which allows a more efficient planning, for example of the maintenance operations of the vehicle.

A further advantage concerns the possibility of tracking the single vehicle, with interesting consequences for example in the management of company fleet and protection for insurance companies and/or for potential buyers of a used vehicle.

A further advantage comes from the extreme flexibility of the proposed flexibility system, which, although it is mainly developed for motor vehicles with dual power source, can be used in different applications, for example on electric kick scooters. In this case, a gyroscope can be introduced in order to detect the inclination of the vehicle and possible accidents.

Obviously, a person skilled in the art, in order to satisfy contingent and specific needs, may make numerous modifications and variations to the invention described above, all however contained within the scope of protection of the invention as defined by the following claims.

## Claims

1. Monitoring system (1; 2) of parameters related to a vehicle comprising: a main unit (2) equipped with a control and processing board (20) provided with Internet connectivity and which can interface with at least one electronic control unit of a vehicle; and an interface unit (1), separated from the main unit (2), said interface unit (1) being configured to be able to acquire and forward to the main unit (2) a plurality of different signals corresponding to different manipulations of an operator.

2. Monitoring system (1; 2) according to claim 1, wherein said interface unit (1) comprises a front button (10) and a rotating ring (11) which are manipulable by the operator to forward at least three different signals.

3. Monitoring system (1; 2) according to claim 2, wherein said rotating ring (11) is arranged to alternately operate two opposed pressure switches (14) when rotated in the one or in the other direction.

4. Monitoring system (1; 2) according to one of claims 2 or 3, wherein said interface unit (1) comprises a substantially cylindrical case (15), said rotating ring (11) defining the side wall and said front button (11) defining the exposed base of said cylindrical case.

5. Monitoring system (1; 2) according to one of claims 2-4, wherein said interface unit (1) comprises lighting means arranged to define a lighting effect on the surface of said rotating ring (11), to inform the operator of a condition and/or the intensity of a parameter.

6. Monitoring system (1; 2) according to one of the previous claims, wherein said main unit (2) comprises at least one accelerometer (21) used by the control and processing board (20) to identify alarm conditions due to accelerations and/or decelerations exceeding a threshold value.

7. Monitoring system (1; 2) according to one of the previous claims, wherein said main unit (2) comprises at least one GPS receiver (22) arranged to identify the vehicle position.

8. Monitoring system (1; 2) according to one of the previous claims, wherein said main unit (2) comprises at least one CAN-BUS input port (23) arranged to interface with the electronic control unit ECU of a vehicle.

9. Monitoring system (1; 2) according to one of the previous claims, configured to allow, upon a command given by the user through the interface unit (1), the switching from a first to a second type of power source of a vehicle, and vice versa.

10. Monitoring system (1; 2) according to claim 9, wherein said main unit (2) is configured to interface with a control unit dedicated to the second type of power source of the vehicle, and it is able to modify its parameters.

11. Monitoring system (1; 2) according to claim 10, wherein the parameters of the control unit dedicated to the second type of power source of the vehicle are recalculated in view of diagnostics carried on within the main unit (2).

12. Monitoring system (1; 2) according to claim 10, wherein the parameters of the control unit dedicated to the second type of power source of the vehicle are recalculated in view of diagnostics carried out remotely, through Internet connectivity.

13. Monitoring system (1; 2) according to one of the previous claims, configured to interface through the Internet with a server to store the parameters acquired by the control and processing board (20) for diagnostic predictive purposes.
